Europäisches Patentamt

(19) European Patent Office

Office européen des brevets

(11) Publication number: **0 241 247**
**A2**

# (12) EUROPEAN PATENT APPLICATION

(21) Application number: **87302961.5**

(22) Date of filing: **06.04.87**

(51) Int. Cl.⁴: **C 09 K 9/02**

(30) Priority: **07.04.86 US 849223    10.09.86 US 905808**

(43) Date of publication of application:
**14.10.87  Bulletin  87/42**

(84) Designated Contracting States:
**AT BE CH DE ES FR GB IT LI NL SE**

(71) Applicant: **RAYCHEM CORPORATION**
**300 Constitution Drive**
**Menlo Park California 94025  (US)**

(72) Inventor: **Milroy, James Craig**
**1815 Park Blvd.**
**Palo Alto California 94306  (US)**

**Parker, Robert**
**411 Rollinghills Lane**
**Alamo California 94507  (US)**

**Tan, Jacqueline**
**221 N. Rengstorff No. 20**
**Mountain View California 94043  (US)**

(74) Representative: **Jay, Anthony William et al**
**Raychem Limited Intellectual Property Law Department**
**Faraday Road**
**Dorcan Swindon SN3 5HH Wiltshire  (GB)**

(54) **Reversible temperature indicating compositions.**

(57) A composition for reversibly indicating a threshold temperature, comprising a transparent, flexible matrix material and an indicating material dispersed within the matrix material and having a phase transition at the threshold temperature; the refractive index of the indicating material matching the refractive index of the matrix material, at the threshold temperature. At temperatures below the threshold temperature, the composition is opaque, while at the threshold temperature, or above, the composition is transparent.

DIRECTION
OF VIEWING

*FIG_2*

EP 0 241 247 A2

**Description**

## REVERSIBLE TEMPERATURE INDICATION COMPOSITIONS

This invention relates to reversible temperature indicating compositions, to articles having such compositions, to methods for making such indicating compositions, and to methods of indicating the temperature of a surface utilizing such compositions.

There are numerous situations in which it is desirable to be able to ascertain quickly and simply the temperature of an object. For example, one may wish to determine whether an object is still too hot to touch, whether an apparatus has reached or exceeded a safe operating temperature, or whether a temperature-sensitive material is being stored at too elevated a temperature. Other situations in which temperature determination is of importance include the monitoring of material temperatures during injection molding, the monitoring of surface temperatures during the recovery of heat-recoverable materials, and overtemperature warning indicators on motor bearings.

For reasons of convenience, economy, or safety, it is often desirable that temperature indicators be self-contained. That is, they should not be connected to any read-out devices or possess electrical leads. This is especially important for applications involving moving components, such as bearings, brake linings, tines, etc.

A number of relatively simple thermally indicating materials and/or devices exist. Cholesteric liquid crystal thermometers for measuring body temperature, employing liquid crystals whose color varies with temperature, are widely sold in pharmacies. These operate by Bragg scattering of incident light when the pitch length of the cholesteric liquid crystal helix becomes comparable to the wavelength of the light. The temperature range over which such devices are useful is usually narrow, because of the thermal instability of the liquid crystal material.

Wahl et al., in US 3,002,385, discloses a temperature indicator in which a colored material is deposited on top of a contrastingly colored and darker substrate. When heated to above the temperature of the colored material, it melts and is absorbed or mixed into the substrate, causing the color of the background material to show through. An evident limitation of such a device is its irreversibility.

Doane, in Int. Pat. Applic. WO 85/04262, discloses a light modulating material comprising droplets of liquid crystal dispersed in epoxy resin. When the liquid crystal is in its liquid crystalline phase, the material appears opaque, due to light scattering. When the liquid crystal is in its isotropic phase, its index of refraction matches that of the epoxy resin, and the material appears to be clear. While it is reversible, the Doane material has a number of limitations. Its temperature indicating transitions are limited to those for which there exist liquid crystals having the desired mesomorphic to isotropic transition temperature and the requisite thermal stability. Because most substances are not mesomorphic and because liquid crystals may have complex structures, securing the appropriate liquid crystal may be difficult or expensive, or both. Furthermore, epoxy resins are known to be relatively rigid and incapable of accomodating a substantial volume change in the dispersed dispersed material, as occurs where the dispersed material undergoes a solid-to-liquid phase transition. This consideration is of importance where the indicating composition is intended for use with dispersed materials other than liquid crystals.

In view of the above, it is desirable to prepare a reversible temperature indicating composition, capable of functioning at elevated temperatures, and comprising relatively inexpensive materials.

This invention provides a composition for reversibly indicating a threshold temperature, comprising: (a) a transparent, flexible matrix material and (b) an indicating material dispersed within the matrix material and having a phase transition at the threshold temperature; the refractive index of the indicating material matching the refractive index of the matrix material, at the threshold temperature.

The matrix material is preferably an elastomer, more preferably a silicone resin. Preferred indicating materials include polymers, particularly liquid crystalline polymers, and more particularly polysiloxanes having pendant mesogenic groups, and waxes.

In using a composition of this invention for indicating whether a threshold temperature has been exceeded on a surface, the composition is placed proximately to the surface. If surface is above the threshold temperature, the composition is transparent; if the surface is below the threshold temperature, composition is opaque.

The present invention also provides an article for reversibly indicating a threshold temperature, comprising a supporting material and a composition of this invention, on the surface of the supporting material.

Applicants also provide methods for making compositions of this invention. According to one method, a particulate indicating material is mixed with one part of a two-part matrix material; the second part of the matrix material is mixed in; and the overall mixture is deposited onto a supporting substrate and allowed to cure. According to another method, a solid indicating material is mixed with one part of a two-part matrix material; the mixture is heated, with stirring, to above the melting temperature of the indicating material and then cooled; the second part of the matrix material is added; the overall mixture is deposited onto a supporting substrate and allowed to cure.

Fig. 1 depicts in cross-section an article employing a composition of this invention, in which the composition is supported by a transparent supporting material and the observer views the composition through the supporting material.

Fig. 2 depicts in cross-section an article employing a composition of this invention, in which the composition is supported by a dark or black supporting material and the observer views the composition directly.

Fig. 3a-d depict an embodiment in which an erasable message with a latent image is impressed on a composition of this invention.

A composition of this invention reversibly indicates temperature changes. It comprises a transparent, flexible matrix material and an indicating material, dispersed within the matrix material. The matrix material and the indicating material are selected such that the refractive index of the matrix material matches that of the indicating material at, or above, the temperature to be indicated, hereinafter called the threshold temperature. Conversely, the indicating material should have a refractive index not matching that of the matrix material, at temperatures below the threshold temperature. Thus, at temperatures below the threshold temperature, the dispersed indicating material scatters incident light, causing the composition to have an opaque appearance. At the threshold temperature, or above, because of the match in refractive indices, the dispersed indicating material does not scatter incident light, causing the composition to appear transparent. Therefore, when the composition undergoes an opaque to clear transition, an observer is informed that the threshold temperature has been exceeded.

The indicating material is selected so as to have a phase transition at the threshold temperature such that, after undergoing the phase transition, its refractive index matches that of the matrix material. Since a large change in refractive index normally accompanies a phase change, a sharp transition from a non-matching to a matching refractive index state is achieved. The phase transition can be a melting, as for example where the indicating material is a crystalline solid. In such an instance, it is understood, of course, that the indicating material is in a liquid state above the threshold temperature, but that upon cooling below the threshold temperature, it reassumes a solid state. Alternatively, the phase transition can be a mesomorphic to isotropic transition, as for example where the indicating material is a liquid crystalline material.

The matrix material should be transparent, to maximize the visual contrast of the opaque-to-transparent transition at the threshold temperature. Since the indicating material dispersed within it can undergo significant volume changes upon melting, up to several per cent, it is also desirable that the matrix material be flexible, in order to accomodate these volume changes. Otherwise, the resulting stresses can cause fractures in the matrix material, thus permitting the indicating material to leak out or causing the sample to crack or break up. Furthermore, use of a flexible matrix material results in a flexible indicating composition, which is able to conform more closely to surfaces with curved or irregular topographies, thereby resulting in more accurate temperature indications on such surfaces. If desirable, the matrix material can include a dye, so that the overall visual appearance at the threshold temperature is from an opaque colored composition to a clear colored composition.

The matrix material is preferably an elastomer, more preferably a silicone resin. For convenience in fabrication, the silicone resin is preferably consists of two parts, commonly designated Part A and Part B. The two parts are mixed in a proportion which may vary according to the particular resin and manufacturer, and then allowed to cure. The cure may take place at room temperature or at an elevated temperature, again depending on the particular resin and manufacturer. Other preferred matrix materials are polymers such as polyurethane or polyethylene-based ionomers such as as Surlyn.

As stated above, the indicating material should be selected such that it has a phase transition at the threshold temperature and such that its refractive index after undergoing the phase transition matches the refractive index of the matrix material. By a match in the refractive indices, it is not meant that there must be a perfect match, but that there is substantial similarity. The difference between the refractive indices should preferably be less than about 0.12, more preferably less than about 0.06.

In preferred compositions of this invention, the indicating material is particulate. A particulate indicating material offers several advantages over the dispersed droplets of Doane. A particulate indicating material will not tend to coalesce, when the matrix material has not yet cured, as is likely to occur with droplets. Thus, the uncured matrix material can be of a lower viscosity, facilitating manipulations such a spraying, silk-screening, or casting. Where the indicating material is available in finely particulate form, as in the case of micronized waxes, precise particle size control is attainable, resulting in more efficient light scattering with a lesser amount of material, and, therefore, greater contrast between the opaque and transparent states. The more irregular surfaces of particulate indicating materials, as opposed to the more spherical surfaces of droplets, also contribute to more efficient light scattering. Furthermore, once dispersed inside the cured matrix material, a particulate indicating material will have a lesser tendency to migrate out than droplets.

The indicating material can be a low molecular weight organic molecule, a wax, or a linear, branched, or cyclic polymer. As used herein, the term polymer includes oligomers. If a polymer, it can be lightly crosslinked, so as to minimize any tendency for it to separate out from the matrix material during use, as might otherwise occur after a number of temperature cycles. Waxes and polymers are preferred. A preferred amount of indicating material between about 40 and about 100 weight per cent, more preferably preferably between about 70 and about 100 weight per cent, relative to the weight of matrix material.

Preferred indicating materials are the finely particulate hydrocarbon or paraffin waxes, particularly those known in the trade as "micronized". Preferred particle sizes range from about 2 to about 50 microns, more preferably about 6 to about 20 microns.

Preferred polymeric indicating materials are liquid crystalline polymers, particularly polysiloxanes having pendant mesogenic groups. Suitable mesogenic groups include but are not limited to phenyl cyclohexane carboxylate, cyclohexylphenyl ether, cyclohexylbenzenes, cyclohexyl cyclohexane carboxylate, dicyclohexyl derivatives, stilbene derivatives, phenyl benzoate derivatives, benzylidene aniline derivatives, azobenzene derivatives, azoxybenzene derivatives, alkyl and alkoxy biphenyl derivatives, Schiff bases, and cholesterol and cholestane derivatives. The polysiloxanes can be can be crosslinked, if desired. The preparation of such siloxanes is described in U.S. 4,358,391 (Finkelmann et al.), U.S. 4,388,453 (Finkelmann et al.), and U.S. 4,410,570 (Kreuzer et al.), the disclosures of which are incorporated herein by reference.

Those skilled in the art will appreciate that the indicating material, whether polymeric or not, can include a number of additives, for example antioxidants, UV stabilizers, etc.

A composition of this invention can be used in a variety of ways. It can be used alone, as a slab or piece of film. Alternatively, it can be used in articles, among which are preferred those in which the indicating composition is supported by a supporting material. The composition is preferably bonded to the supporting material, for example by lamination. Where the composition is bonded to the supporting material, a flexible matrix material in the composition is especially desirable, as it causes the composition to be flexible and therefore better able to absorb the stresses caused by unequal coefficients of thermal expansion between it and the supporting material, as the article is subjected to temperature cycles or excursions. The supporting material confers additional rigidity and ease of handling, in applications where such characteristics are desirable. For those articles which are designed such that the supporting material is between the observer and the indicating composition, the supporting material should of course be transparent, for example polyamide or poly(ethylene terephthalate) film. For those articles which are designed such that the observer views the indicating composition directly and the supporting material is behind the indicating composition, the supporting material is preferably dark or black, to enhance the contrast of the opaque-to-transparent transition. Examples of such supporting materials are black polyamide or poly(ethylene terephthalate) film or anodized aluminum.

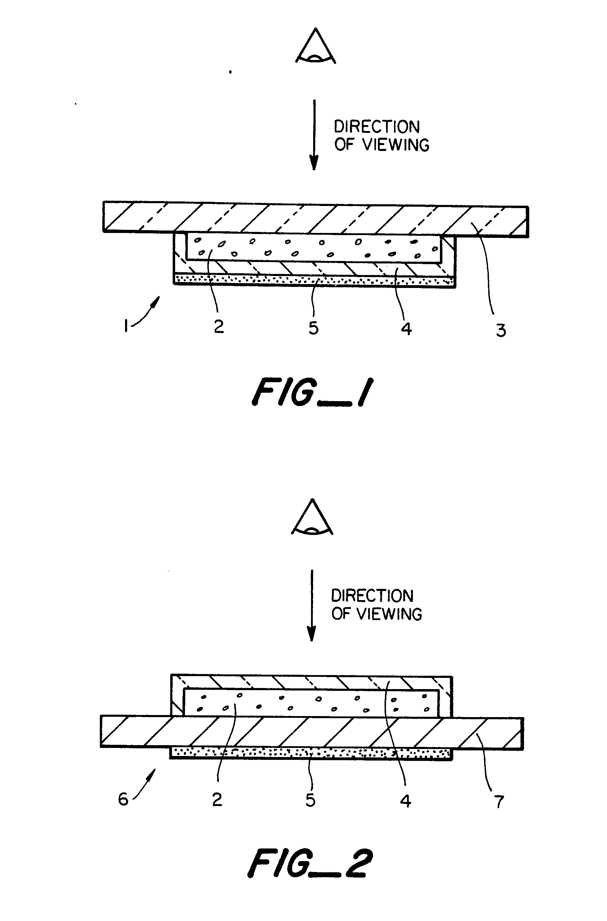

Two preferred articles are illustrated in Fig. 1 and 2. Fig. 1. depicts in cross-section an article 1 in which a temperature indicating composition 2 of this invention is deposited onto a transparent supporting material 3. The composition 2 is protected by a protective overcoat 4. An optional adhesive layer 5 can used to adhere the article to an object whose temperature is being indicated.

Fig. 2 depicts in cross section an alternative preferred embodiment, in the form of an article 6 having a temperature indicating composition 2 of this invention deposited onto a black or dark supporting material 7. The composition 2 is protected by a protective overcoat 4. An optional adhesive layer 5 can be used to fasten the article to an object whose temperature is being indicated.

The use of a protective overcoat 4 is particularly advantageous where the article will be exposed to a temperature above the threshold temperature for significant periods of time, but yet needs to revert back to its original state upon cooling to a temperature below the threshold temperature. The overcoat helps protect the underlying matrix and indicating materials from deterioration, for example from thermooxidative degradation or hydrolysis. Preferably, the overcoat is made from a material having good barrier properties, meaning the material is relatively resistant to the permeation of substances such as oxygen or water therethrough. Suitable overcoat materials include fluoropolymers such as poly(vinylidene fluoride) (e.g., Kynar), poly(ethylene-chlorotrifluoroethylene) (e.g., Halar), poly(ethylene-tetrafluoroethylene) (e.g., Tefzel) and poly(vinyl fluoride) (e.g., Tedlar); polyimides (e.g., Kapton); polycarbonates (e.g., Lexan); polyesters (e.g., Mylar); and glass. While Figures 1 and 2 depict the overcoat material as completely covering the article, it is to be understood that complete coverage is not required for a substantial degree of protection to be effected.

It is to be noted that in detecting a threshold temperature on a surface, the composition can be placed directly onto the surface, but that direct contact is not a requisite. It is sufficient that the composition be proximate to the surface; it can be separated from the surface by a thin layer of material, such as the supporting material, the protective overcoat, or the adhesive layer, or combinations thereof.

It has been also discovered that when an article comprising a composition of this invention is overlaid on a suitable support material, an erasable image (or message) can be inscribed on the composition, which image is erased when the article is heated to or above the threshold temperature of the composition and then cooled. Furthermore, a latent or ghost image of the image is created which can be visualized by reheating the article to a temperature at or above the threshold temperature and observing it while at such temperature. Thus, this embodiment permits the composition to indicate an excursion to a temperature above its threshold even if it has since returned to a lower temperature and even though it normally acts as a reversible indicator, and to "recall" an image if necessary.

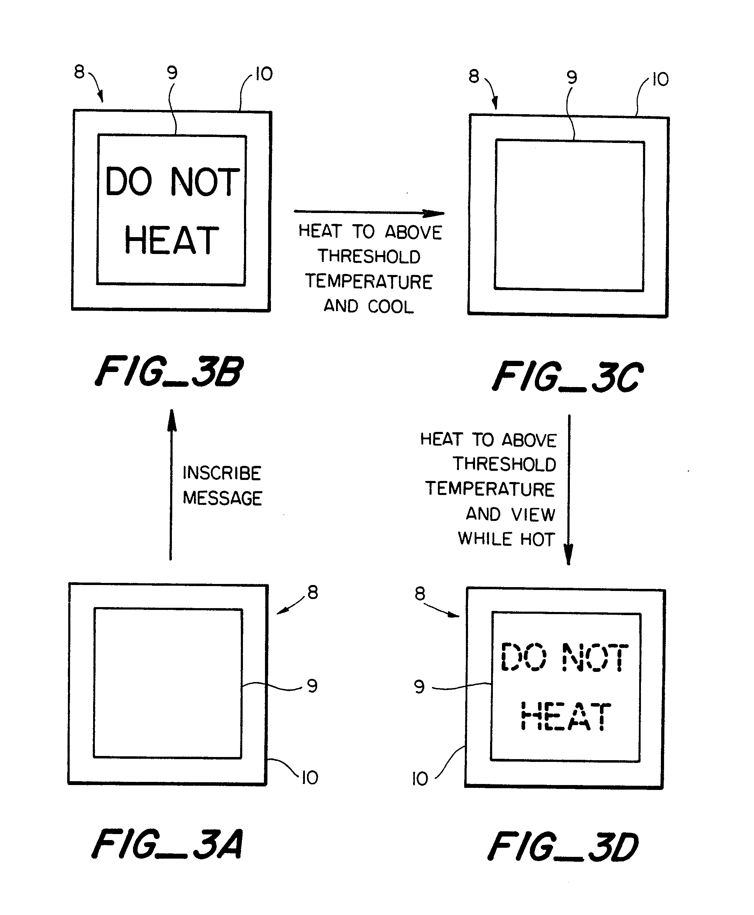

This embodiment can be further understood be reference to Fig. 3a-d. Fig. 3a shows an article 8 comprising a composition 9 of this invention overlaid on a support material 10. An image in form of a printed message is inscribed on the composition and is readily visible, as shown in Fig. 3b. Generally, if no pigmentation has been used in composition 10, the image appears bright or strong white against a less or duller white background. If pigmentation is used, the image appears as a lighter or whiter shade of color against a darker and/or stronger colored background, for example pink on red. Upon heating article 8 to a temperature above the threshold temperature of composition 10 and cooling, the image vanishes, as shown in Fig. 3c. A latent or ghost image of the image can be seen by reheating article 8 to a temperature above the threshold temperature and viewing it while at such temperature, as shown in Fig. 3d.

Suitable support materials for this particular embodiment include paper, preferably black or colored paper which contrasts with the composition, polymeric film, for example poly(ethylene terephthalate) or polyamide film, and metal foil, for example aluminum foil, preferably anodized aluminum foil. In the selection of the support material, consideration should be given to factors such as service conditions, including temperature, and degree of contrast for ease of visualization. While the thickness of the composition is not critical, it should not be too thin, for then the composition is too readily punctured by the pressure of inscribing the image, nor too thick, for then it may be difficult to feed it into mechanical inscribing apparatus, such as a typewriter or stamping machine. A preferred thickness is between about 1 and about 20 mils, more preferably between about 3 and about 5 mils. Optionally, the composition can be protected by placing a layer of clear material, for example clear silicone resin, over it.

In the inscribing process, generally a cover sheet is recommended to protect the composition. A thin cover sheet is preferred as it tends to result in a sharper message or image. Inscription can be performed mechanically, for example with a typewriter, printer, or stamping machine. Alternatively, a stylus or a fingernail can be used to inscribe the message or image after the composition has been affixed onto an operating surface. Reinscribing is possible after the original message has been erased, although then multiple latent or ghost images may be present.

While we do not wish to be bound by any theory, we believe that the original message is associated with the composition per se, while the latent or ghost image is associated with the support material. When the composition is placed on release paper as the support material and a message is inscribed on it as hereinbefore described, the message remains visible even after the composition is peeled off the release paper. As before, the message vanishes upon heating to about or above the threshold temperature. But upon reheating, no latent or ghost message is visible.

The composition is readily prepared in a number of ways. Where the indicating material is available as or convertible into a fine powder, Method I is preferred. The desired amount of indicating material is mixed in with Part A of a two-part silicone resin. Optionally, a dye may be added. A thinner, such a toluene, can be added, to render the consistency more suitable for subsequent printing or coating. Part B of the silicone is added, and mixing is continued until thorough mixing is attained. The composition is then applied onto a supporting material, such as paper or polymer film by conventional techniques such as knife coating, silk screening, or spraying. Where it is desirable to apply the composition in a pattern, silk screening is a recommended technique. If the silicone resin is of the type which admits to curing at an elevated temperature, an oven may be used. After curing, the composition can be separated from the supporting substrate, or used while still supported by the supporting substrate, depending on the intended end use.

If the indicating material is a solid which is not available as or convertible into a powder of sufficiently fine particle size to be dispersed in the matrix material, Method II is preferred. The desired amount of indicating material is mixed with part A of a two part silicone resin. This mixture is heated to a temperature above the melting point of the indicating material, resulting in a fine dispersion of droplets of molten material in part A. The mixture is then cooled, with continued stirring, back to room temperature, to provide a dispersion of indicating material in Part A. At this point, thinner and dye may be added, if desired. Part B of the silicone resin is then added and stirring is continued until thorough mixing is attained. The mixture is coated, sprayed, or silk-screened and cured, as above.

In addition to dyes and thinners, other additives such as antioxidants and UV stabilizers can also be added. If desirable, a protective overcoat can be applied over the composition after curing. Besides providing physical protection for the composition, the protective overcoat serves as a barrier for preventing the migration of indicating material that is on or near the surface of the matrix material out of the matrix material. Since, in instances where a protective overcoat is used, the composition must be visible through the protective overcoat, the latter should of course be transparent. A preferred protective overcoat material is silicone resin.

The invention can be more fully understood by reference to the following examples. It is to be understood that these examples are provided by way of illustration only and not by way of limitation.

Example 1

A polysiloxane cyclic pentamer (2.7 g, Consortium fur Elektrochemische Industrie GMBH, Munich, Germany, hereinafter CEI), having a 3:1 ratio of pendant mesogenic groups
$-(CH_2)_3-O-Ph-CO-O-Ph-OCH_3$
and
$-(CH_2)_{10}-CO-O-Ch$
where Ph represents p-phenylene and Ch represents cholesteryl, was used as the indicator material. This polysiloxane had a 70 °C clearing point, as measured on a melting point apparatus, and a refractive index of 1.529 at 76 °C. It was dispersed in Part A of a two-part silicone resin (5.4 g, Sylgard 184, Dow Corning, refractive index of cured resin 1.41) following Method II, described hereinabove. Part B (0.54 g) of the silicone resin was then added and the dispersion was cured in an oven.

The resultant composition had a threshold temperature of about 70 °C. The threshold temperature was determined by placing the composition on a hot plate and observing the temperature at which it went from opaque to clear.

## Example 2

Example 1 was repeated, except that a polysiloxane cyclic pentamer (CEI) having a 3:1 ratio of pendant mesogenic groups

-(CH₂)₃-O-Ph-CO-O-Ph-OCH₃

and

-(CH₂)₃-O-Ph-CO-O-Ch

was used as the indicating material. This polysiloxane had a 130 °C clearing point and a refractive index of 1.526 at about 135 °C. The amount of polysiloxane used was 2.59 g, and the amounts of Part A and Part B of the silicone resin were adjusted to maintain the same overall proportions of materials as in Example 1.

The resulting composition had a threshold temperature of about 130 °C.

## Example 3

Example 1 was repeated, except that a polysiloxane cyclic pentamer (CEI) having a 65:35 ratio of pendant mesogenic groups

-(CH₂)₃-O-Ph-CO-O-Ph-Ph-H

and

-(CH₂)₃-O-Ph-CO-O-Ch

was used as the indicating material. This polysiloxane had a 205 °C clearing point. Its refractive index was estimated to be about 1.53 at about is clearing point. The amount of polysiloxane was 3.04 g, and the amounts of Part A and Part B of the silicone resin were adjusted to maintain the same proportions of materials as in Example 1.

The resulting composition had a threshold temperature of about 205 °C.

## Example 4

The polysiloxane of Example 3 (2.0 g) was dispersed in Part A of a two-part silicone resin with refractive index 1.47 (4.0 g, OF 103, Shin Etsu, Japan) by heating to 220 °C. An antioxidant (0.08 g, Irganox 1010) and Part B (0.40 g) were then added.

The cured composition was somewhat lumpy. The appearance change at the 205 °C threshold temperature was very sharp, going from opaque to very clear.

## Example 5

A micronized paraffin wax (2.76 g, Mekon White, Petrolite Specialty Polymers Group, Tulsa, Oklahoma, hereinafter Petrolite) was used as the indicator material. Its melting point was 82 °C and its refractive index was 1.464 at 85 °C. It was dispersed in Sylgard 184 (5.52 g of Part A and 0.55 g of Part B), following Method I, described hereinabove.

The resulting composition had a threshold temperature of about 82 °C. It remained functional even after being placed for more than three weeks on top of a hot plate set at 100 °C.

## Example 6

Example 5 was repeated, except that the Mekon White was replaced with Polywax 2000 (Petrolite), which had a a melting point of 122 °C and a refractive index of about 1.43 in the melt. The resulting composition had a threshold temperature of about 122 °C.

## Example 7

Example 5 was repeated, using a 1:1:0.1 ratio of Mekon White, Part A, and Part B. The cured composition had a high-contrast appearance change at the threshold temperature.

## Example 8

Example 6 was repeated, using a 3:4:0.4 ratio of Mekon White, Part A, and Part B. The cured composition was not as opaque as the composition of Example 7.

## Example 9

This example describes the embodiment of the invention in which an erasable image is inscribed on the composition.

Polywax 3000 J (3-5 micron particle size) was sifted through a 60 mesh screen. The sifted wax (8 g) was thoroughly blended with part A of Sylgard 184 silicone resin (8 g) to form a stiff mixture. Next part B of the silicone resin (0.8 g) and toluene (4.5 g) were blended in.

A layer about 1/10 inch thick of the mixture was screened onto black paper. The coating was allowed to dry at room temperature, then cured overnight at 50 °C.

A message could be inscribed onto the composition/paper article with a typewriter (without ribbon), the message appearing bright white against a duller white background. Upon a first heating to above the threshold temperature, the message disappeared and did not reappear upon cooling. However, on a second reheating to above the threshold temperature, a ghost image of the typewritten message appeared.

Similar results were obtained by handwriting against the surface of the composition, with a stylus and with a thin sheet of release paper in between for protection.

## Example 10

This example also describes an embodiment of the invention in which an erasable image is incribed on the composition.

A polysiloxane cyclic pentamer (5 g, CEI), having a 40:60 ratio of pendant mesogenic groups

-(CH₂)₃-O-Ph-CO-O-Ch

and

-(CH₂)₃-O-Ph-CO-O-Ph-Ph-H

and a clearing point of about 190 °C, was mixed thoroughly with Irganox antioxidant (0.2 g) and Sylgard 184 silicone resin (5 g of part A and 0.5 g of part B). The mixture was screened through a 61 mesh monofilament screen onto paper substrate and cured in a 75 °C oven for one hour.

An erasable message could be typed onto the composition, with a typewriter and a release liner between the type and the composition as a protector. On heating to 200 °C on a hot plate, the message disappeared.

## Example 11

Into a beaker was weighed 20 g of polyurethane latex (Neorez R967, from Polyvinyl Chemical Industries, 40 % solids loading) followed by 4 g of Polywas 500 (Petrolite, mp 84 °C). The slurry was stirred until well mixed, then was centrifuged to remove the air bubbles introduced on mixing. The resulting opaque viscous fluid was coated onto a glass slide and allowed to dry overnight. The coated slide was very opaque at room temperature, but became essentially clear when heated at 90 °C. The transition was reversible.

## Claims

1. A composition for reversibly indicating a threshold temperature, comprising:

(a) a transparent, flexible matrix material and

(b) an indicating material dispersed within the matrix material and having a phase transition at the threshold temperature;

the refractive index of the indicating material matching the refractive index of the matrix material, at the threshold temperature.

2. A composition according to claim 1, wherein the matrix material is an elastomer.

3. A composition according to claim 1, wherein the matrix material is a silicone resin, a polyurethane, or a polyethylene-based ionomer.

4. A composition according to claim 1, 2 or 3 wherein the indicating material is a polymer.

5. A composition according to claim 1, 2 or 3 wherein the indicating material is a liquid crystalline polymer.

6. A composition according to claim 1, 2 or 3 wherein the indicating material is a polysiloxane having pendant mesogenic groups.

7. A composition according to claim 1, 2 or 3 wherein the indicating material is a wax.

8. A composition according to any of the preceding claims, wherein the indicating material is particulate.

9. A composition according to claim 8, wherein the indicating material has a particle size between about 2 and about 50 microns.

10. A composition according to any of the preceding claims, wherein the difference between the refractive indices of the matrix material and the indicating material, at the threshold temperature, is less than about 0.12.

11. A composition according to any of the preceding claims, having between about 40 and about 100 weight per cent indicating material, relative to the weight of matrix material.

12. An article for reversibly indicating a threshold temperature, comprising a supporting material carrying a composition according to any of the preceding claims.

13. An article according to claim 12, wherein the supporting material is selected from the group consisting of paper, polymer film (preferably polyamide or poly(ethylene terephthalate), and metal foil (preferably anodized aluminium).

14. An article according to claim 12 or 13, further comprising a protective coating overlying the said composition.

15. A method of making a composition according to any of claims 1 to 11, comprising the steps of:

(a) preparing a mixture of the indicating material in one component of a two-part, curable, transparent, flexible matrix material;

(b) mixing in thoroughly the other component of the two-part matrix material, to produce a uniform dispersion of the indicating material in uncured matrix material;

(c) depositing a coating of the dispersion onto a supporting substrate; and

(d) allowing the uncured matrix material to cure.

16. A method according to claim 15 wherein a solid indicating material is used, comprising the additional step of heating, with stirring, the mixture of step (a) to a temperature above the melting temperature of the indicating material, and cooling, with continued stirring, the said mixture to a temperature at which the indicating material resolidifies.

17. A method of indicating whether the temperature of a surface is at or above, or below a threshold temperature, comprising the steps of:

(I) placing proximately to the surface a composition according to any of claims 1 to 11, and

(II) observing whether the composition is opaque, thereby indicating that the surface is below the threshold temperature, or transparent, thereby indicating that the surface is at or above the threshold temperature.

18. An article for indicating a threshold temperature having a thermally erasable message, comprising a composition according to any of claims 1 to 11 having an image or message inscribed thereon.

0241247

FIG_1

FIG_2

0241247

FIG_3B

HEAT TO ABOVE THRESHOLD TEMPERATURE AND COOL

FIG_3C

INSCRIBE MESSAGE

HEAT TO ABOVE THRESHOLD TEMPERATURE AND VIEW WHILE HOT

FIG_3A

FIG_3D